(19) Europäisches Patentamt
European Patent Office
Office européen des brevets

(11) Publication number: 0 191 326
A1

# (12) EUROPEAN PATENT APPLICATION

(21) Application number: 86100781.3

(22) Date of filing: 22.01.86

(51) Int. Cl.⁴: C 08 L 71/04, C 08 L 25/16

(30) Priority: 04.02.85 US 698500

(43) Date of publication of application: 20.08.86
Bulletin 86/34

(84) Designated Contracting States: BE DE FR GB IT NL SE

(71) Applicant: THE DOW CHEMICAL COMPANY, 2030 Dow Center Abbott Road P.O. Box 1967, Midland, MI 48640 (US)

(72) Inventor: Traugott, Thomas D., 202 Harrison Street, Midland Michigan 48640 (US)
Inventor: Seiss, Randolph H., 5 Norwich Court P.O. Box 1002, Midland Michigan 48640 (US)

(74) Representative: Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Möhlstrasse 22, D-8000 München 80 (DE)

## (54) Blends of alpha-methylstyrene copolymers and polyphenylene ethers.

(57) A blend of a polyphenylene ether and a graft copolymer of styrene and anionically polymerized α-methylstyrene is disclosed having an extremely high softening temperature. Elastomers including styrene grafted polybutadiene may additionally be incorporated to provide improved impact.

EP 0 191 326 A1

# BLENDS OF α-METHYLSTYRENE COPOLYMERS AND POLYPHENYLENE ETHERS

The term polyphenylene ether resin includes a family of polymers well known to those skilled in the art. They are made by a variety of catalytic and non-catalytic processes from the corresponding phenols or reaction derivatives thereof. These resins have been described in U.S. 3,306,874, 3,306,875, 3,257,357 and 3,257,358. Polyphenylene ethers are high performance engineering thermoplastics possessing relatively high melt viscosities and softening points, i.e., in excess of 275°C. They are useful for many commercial applications requiring high temperature resistance, including the formation of films, fibers and molded articles. For many applications, however, the correspondingly high melt viscosities and softening points of these polymers cause undesirable molding characteristics (for example, difficulty in obtaining uniform mold filling and surface imperfections caused by poor melt flow). It would be desirable to provide polyphenylene ether containing molding compositions possessing high performance properties, such as high softening points, while avoiding the disadvantages inherent in prior art resins.

In U.S. 3,383,435 there are disclosed blends of styrenic polymers and polyphenylene ethers. Suitable styrenic polymers include homopolymers and copolymers of styrene and also rubber modified copolymers, such as copolymers of butadiene, styrene and, optionally, acrylonitrile. In addition, the reference teaches that blends of the polyphenylene ether with a styrene-α-methylstyrene copolymer will have physical properties similar to those of a blend of a polyphenylene ether and a styrene acrylonitrile copolymer (Column 8, line 17).

Copolymers comprising styrene and α-methylstyrene are, of course, well known. The copolymer may be prepared by free radical, cationic or preferably anionic polymerization techniques. Particular polymerization systems representative of those useful in anionic polymerizations are disclosed in the following U.S. Patents: 2,975,160; 3,030,346; 3,031,432; 3,139,416; 3,157,604; 3,159,587; 3,231,635; 3,498,960; 3,590,008; 3,751,403; 3,954,894; 4,183,877; 4,196,153; 4,196,154; 4,200,713; 4,205,016. Anionic polymerization may be employed to prepare random copolymers of styrene and α-methylstyrene containing no more than two adjacent α-methylstyrene moieties. The polymerization is performed at a temperature above the ceiling temperature of at least one of the monomers employed in the copolymerization. The "ceiling temperature" is defined as the temperature at which depolymerization of a polymer is thermodynamically favored over polymerization. Accordingly, at temperatures above the ceiling temperature, no further chain growth of a homopolymer of the monomeric species in question may occur. In particular regard to the styrene-α-methylstyrene system, it is

possible to obtain a maximum of two α-methylstyrene units for every styrene monomer unit in the copolymer. On a weight basis, such copolymers would contain 69.14 percent α-methylstyrene and would be stable to depolymerization even at temperatures in excess of the temperature at which a homopolymer of the monomer would be unstable. α-Methylstyrene has a ceiling temperature of about 61°C. Accordingly, by the technique of anionic polymerization at a temperature of above at least 61°C, stable copolymers of styrene and α-methylstyrene containing from 5 to about 69.14 percent α-methylstyrene, and preferably from about 20 to about 69.14 α-methylstyrene, may be prepared. Such stable copolymers of styrene and α-methylstyrene prepared by anionic polymerization are referred to herein by the acronym "SAMS".

According to the present invention, it has now been discovered that blends of polyphenylene ethers and specific copolymers of styrene and α-methylstyrene (prepared by anionic polymerization and containing from about 5 percent to about 69.14 percent by weight α-methylstyrene) have improved physical properties.

Broadly, the product of the invention is a thermoplastic blended composition containing by weight from 1 to 99 percent of a polyphenylene ether and from 99 to 1 percent of a copolymer characterized by the copolymer consisting essentially of from 95 to 30.86 percent styrene and from 5 to 69.14 percent α-methylstyrene, the copolymer having been prepared by anionic polymerization of styrene and α-methylstyrene at a temperature above 65°C.

Broadly, the process of the invention is a process for increasing the softening point and toughness of a first composition containing a poly phenylene ether, characterized by melt blending a styrene-α-methylstyrene copolymer with the first composition, thereby forming the product of Claim 1.

The anionic polymerization of styrene and α-methylstyrene monomers may be initiated by use of an organometallic anionic polymerization initiating compound. Generally, such polymerization initiating compound is added to an anionically polymerizable monomer mixture retained under polymerization conditions. Suitably, a stirred tank reactor may be employed and the monomers continuously added to the reactor and the reaction mixture discharged from the reactor at about the same rate as the monomers are added to the reactor.

As is known, monomers for use in anionic polymerization may be first purified by a suitable purification means, such as by distillation and the use of a molecular sieve bed. According to the invention, the highly purified monomers are charged to a reactor vessel and the reaction is initiated at a temperature above the ceiling temperature employing a monomer mixture comprising styrene, α-methyl styrene and solvent. Suitable solvents for the above polymerization are those solvents previously known in the art. Preferred are hydrocarbons such as cyclohexane, benzene or ethyl benzene.

The product resulting from the above polymerization is a random copolymer of styrene and α-methyl-

styrene containing no more than two adjacent α-methylstyrene monomeric moieties in the copolymer matrix. The amount of styrene monomer present in the polymerization may be adjusted in order to prepare random copolymers having any desired amount of styrene monomers from 95 to 30.86 percent by weight. Suitable copolymers comprise random copolymers of α-methylstyrene and styrene containing from about 5 percent to 69.14 percent by weight α-methylstyrene. Preferred copolymers comprise from 20 percent to 69.14 percent by weight α-methylstyrene.

The polyphenylene ethers with which this invention is concerned are self-condensation products of monohydric, monocyclic phenols which can be produced, for example, by reacting the phenols with oxygen in the presence of complex copper catalysts. In general, molecular weight will be controlled by reaction time, longer times providing a higher average number of repeating units.

A preferred family of polyphenylene ethers will have repeating structural units of the formula:

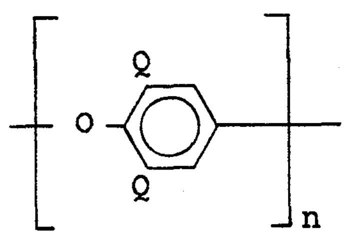

wherein the oxygen ether atom of one unit is connected to the benzene nucleus of the next adjoining unit, n is a positive integer and is at least 50, and each Q is a

monovalent substituent selected from the group consisting of hydrogen, halogen, hydrocarbon radicals free of a tertiary alpha-carbon atoms, halohydrocarbon radicals having at least two carbon atoms between the halogen atom and the phenyl nucleus, hydrocarbonoxy radicals and halohydrocarbonoxy radicals having at least two carbon atoms between the halogen atoms and the phenyl nucleus.

Illustrative members are: poly(2,6-dilauryl--1,4-phenylene)ether; poly(2,6-diphenyl-1,4-phenylene)-ether; poly(2,6-dimethoxy-1,4-phenylene)ether; poly-(2,6-diethoxy-1,4-phenylene)ether; poly(2-methoxy-6--ethoxy-1,4-phenylene)ether; poly(2-ethyl-6-stearyloxy--1,4-phenylene)ether; poly(2,6-dichloro-1,4-phenylene)-ether; poly(2-methyl-6-phenyl-1,4-phenylene)ether; poly(2,6-dibenzyl-1,4-phenylene)ether; poly(2-ethoxy-1,4-phenylene)ether; poly(2-chloro-1,4-phenylene)ether; poly(2,6-dibromo-1,4-phenylene)ether; and the like.

For purposes of the present invention, an especially preferred family of polyphenylene ethers include those having alkyl substitution in the two positions ortho to the oxygen ether atom, i.e., those of the above formula wherein each Q is alkyl, most preferably having from 1 to 4 carbon atoms. Illustrative members of this class are: poly(2,6-dimethyl-1,4-phenylene)ether; poly(2,6-diethyl-1,4-phenylene)ether; poly(2-methyl-6-ethyl-1,4-phenylene)ether; poly(2-methyl--6-propyl-1,4-phenylene)ether; poly(2,6-dipropyl-1,4-phenylene)ether; poly(2-ethyl-6-propyl-1,4-phenylene)ether; and the like.

The most preferred polyphenylene ether resin for purposes of the present invention is poly(2,6-dimethyl-1,4-phenylene)ether.

In addition to the polyphenylene ether and the styrene-α-methylstyrene copolymer, the blend of the present invention may also contain additional components. For example, additional thermoplastic resins such as a rubber and/or amounts of a compatible resin such as polystyrene or a rubber modified high impact polystyrene comprising polystyrene and an elastomeric rubber component such as a polystyrene grafted butadiene rubber. A surprising advantage according to the present invention is that polystyrene grafted rubber particles have been found to be compatible with SAMS and in addition rubber modified polystyrene (high impact polystyrene) has been found to be compatible in the present polymeric blend containing polyphenylene ether resin and SAMS. This result is considered surprising in view of the known fact that polystyrene resin is not easily blendable with α-methylstyrene polymer and the resulting blend generally is marked by greatly decreased physical properties.

Suitable rubbers or elastomers include diene rubbers, styrene or SAMS grafted diene rubbers, copolymers including block copolymers or random copolymers of styrene and a diene, copolymers of alkyl acrylates of from 1 to 12 carbons and olefin rubbers including terpolymers of two olefins and a diene especially a nonconjugated diene. Preferred rubbers comprise a butadiene substrate having styrene polymer grafted thereto. Such rubbers may be prepared by mass, solution, suspension, or emulsion techniques or by a combination thereof. A preferred rubber is prepared by

graft emulsion polymerization of styrene onto a substrate comprising polybutadiene. Most preferably large and small emulsion rubber particles are formed by a suitable technique such as agglomeration thereby providing a bimodal distribution of rubber particles.

The blends of the present invention may be prepared according to known techniques. The polyphenylene ether resin and SAMS are combinable with each other in nearly all proportions to yield a homogeneous appearing product. Consequently, the compositions according to the present invention may comprise from 1 to 99 parts by weight of polyphenylene ether and from 99 to 1 part by weight of styrene-α-methylstyrene copolymer. Preferably, however, the composition is comprised of 10 percent to 75 percent by weight polyphenylene ether. At certain extremes of the composition range thermal analysis may indicate the presence of two glass transition temperatures indicating that although the blend may appear completely homogeneous in fact some incompatability may exist.

The compositions of the present invention may also include reinforcing fillers, such as metals in powder or filament form and non-metals such as carbon filaments, silicates, such as aluminum silicate, asbestos, titanium dioxide, zinc oxide, calcium carbonate, zinc sulfide, potassium titanate and titanate whiskers, glass flakes, clays, kaolin, glass fibers, etc. Glass fibers are particularly preferred reinforcing fillers.

These reinforcing fillers can be present in amounts ranging from 1 to 80 percent by weight of the total composition. For best results, however, the

fillers are preferably present in amounts ranging from 10 to 40 percent by weight of the total compositions.

A particularly preferred embodiment of this invention is to provide flame retardant thermoplastic compositions, as defined above, by modifying the composition to include a flame-retardant additive in a minor proportion but in an amount at least sufficient to render the composition non-burning or ignition hesistant. Any of the well-known flame-retardants may be used in this capacity. Suitable additives for the purpose may include chlorinated or brominated organic compounds especially aromatic compounds and/or inorganic oxides especially antimony trioxide and phosphorus compounds especially phosphates or phosphites eg. triphenyl, phosphate tridecylphosphite, diphenyl decyl phosphite; etc.

The composition of the present invention may be prepared in any conventional manner. For example, a preferred method comprises mixing the polymers in powder or granular form, extruding the mixture into strands, chopping the strands into pellets and molding the pellets into the desired shape.

The improved compositions of this invention are useful for all purposes for which polyphenylene ether compositions have heretofore been used. For example, they may be employed as films, fibers and molding compositions.

The following examples are given so that those skilled in the art may better know how to practice the present invention. These examples are given

by way of illustration only and are not to be construed as limiting in any way. Where provided, percentages and ratios are expressed in parts by weight.

The following procedure was essentially used to prepare the styrene-α-methylstyrene copolymer used in the examples of the invention below.

A. Preparation of Styrene-α-methylstyrene Copolymer.

A feed stream comprising approximately equal volumes of monomers is passed through a heat exchanger which raises the temperature of the feed stream to 55°C. The heated stream is discharged through a spray nozzle into a receiver having an internal pressure of 20 millimeters of mercury. Spraying into the receiver serves to remove oxygen and most of the water present; 1.5 weight percent of the stream is lost. From the receiver, the feed stream is passed through a molecular sieve commercially available under the trade designation of Linde® 3A. The stream is passed through a bed of the molecular sieve at a space velocity of 5 parts of the stream per part of sieve by weight per hour. The resultant feed material contains styrene, α-methylstyrene and ethylbenzene; less than 1 ppm of oxygen; less than 3 ppm of water; less than 5 ppm benzaldehyde; less than 5 ppm styrene oxide; less than 5 ppm of acetophenone; and 40 ppm of phenylacetylene. The purified feed stream is pumped to a 2-liter Paar reactor, equipped with a hollow auger agitator, the hollow auger comprising a cylinder slightly shorter in length than the interior of the reactor and slightly smaller in diameter. A land is helically disposed on the outside of the cylinder. The land is sized such that the cylinder generated by rotation of the hollow

cylinder and land is slightly less than the internal volume of the reactor. Such an agitator is described in U.S. 4,239,863, the teachings of which are herewith incorporated by reference thereto. Hot water under pressure is employed to heat the reactor to 95°C. The purified feed stream and initiator are introduced into the side of the reactor at a rate to give a two-hour residence time. The initiator is normal-butyllithium pumped at a rate to provide 60 ppm. The pressure within the reactor is maintained at 50 pounds per square inch gauge using a pressure control valve at the outlet. The stream from the reactor is fed to a terminator coil of 1 inch inside diameter, 316 Stainless Steel tubing connected in a square configuration and having an internal volume of 467 cubic centimeters. Material is recirculated within the terminator coil while a solution of 1 weight percent ethanol in ethylbenzene is fed to the terminator coil at a rate about twice that of the normal-butyllithium fed to the polymerizing vessel. Effluent from the terminator coil is then pressure fed into a devolatilizer equipped with a flat plate heater and a screw extruder substantially according to that described in U.S. 3,014,702, the teaching of which is incorporated by reference thereto. The exterior of the heater is maintained at a pressure of less than 20 millimeters of mercury and the product mixture is heated to a temperature of 250°C to provide a polymer containing 0.3 weight percent volatiles. The molecular weight of the resultant SAMS polymer over a 24-hour period is maintained at plus or minus 5,000 of 140,000 amu. The color of the product is excellent.

In the following examples, copolymers formed from the indicated quantities of styrene and α-methylstyrene purified and polymerized substantially according to the above-described process are prepared and blended with polyphenylene ether resins substantially according to the respective technique given below within each group of numbered examples. Ratios and percentages are expressed in parts by weight. Particle size distributions are measured as volume averages.

Examples 1-4

Copolymers of styrene and α-methylstyrene having amounts of α-methylstyrene as indicated in Table I are blended with poly(2,6-dimethyl-1,4-phenylene)ether (pellet form, intrinsic viscosity 0.45-0.64 dl/g). The blending is performed by conjoint addition of the two resins to a mixer (available under the tradename Plasticorder from Brabender Corporation). The resins were compounded for 300 seconds at a temperature of 280°C at a mixing speed of 100 rpm. Examples 1-3 were compounded with 50 percent polyphenylene ether (PPE) and 50 percent styrene-α-methylstyrene copolymer (SAMS) with varying amounts of α-methylstyrene (AMS) in the SAMS copolymer. Results of conventional testing of the compositions so-prepared are contained in Table I for Vicat softening point; for Izod impact strength; for tensile modulus (Tm); for tenacity (Ty); and elongation break (E). Percentages of AMS are based on SAMS copolymer weight.

TABLE I

| Example | % AMS | Vicat (°C) | Izod (ft-lbs/in) | Tm ($10^5$psi) | Ty ($10^3$psi) | % E |
|---|---|---|---|---|---|---|
| 1 | 30 | 161 | 0.36 | 4.57 | 10,818 | 2.9 |
| 2 | 48 | 166 | 0.39 | 4.62 | 9,617 | 2.5 |
| 3 | 58 | 183 | 0.18 | 4.49 | 7,936 | 1.9 |
| 4[1] | 0 | 152 | 0.41 | 4.13 | 7,769 | 2.2 |

[1]Not of the invention, polystyrene is substituted for SAMS.

As seen by reference to Table I the blends of the invention demonstrate tensile strengths and heat distortion temperatures substantially higher than those of a blend containing only polystyrene and PPE.

Examples 5-7

A blend of a polyphenylene ether and a copolymer of styrene and anionically polymerized α-methylstyrene having improved impact properties is prepared by incorporating various elastomeric components with or without added polystyrene matrix (high impact polystyrene or "HIPS").

In Example 5, the elastomer is prepared by emulsion graft polymerizing monomers of styrene onto an agglomerated polybutadiene latex having a bimodal size distribution, 50 percent having average diameter of 1100Å and the remainder having a volume average diameter of 2000 to 20,000Å. The particles are agglomerated by use of 0.4 percent of an ethyl acrylate/methacrylic acid copolymer agglomerating latex

substantially according to the teachings of US 3,666,704 or 3,825,621. The grafted rubber particles have a ratio of styrene graft to rubber of about 1. The resulting product is mechanically sheared to form a paste and mechanically dewatered and dried to form a powdered rubber concentrate. This product, referred to as a grafted rubber concentrate (GRC), is melt blended with the polyphenylene ether of Example 1 and SAMS in the ratio 19.2/50/30.8 (GRC/PPE/PS).

In Example 6, the elastomer is prepared by dissolving butadiene in styrene. The resulting solution is polymerized by the well known technique of mass polymerization resulting in a phase inverted structure of polystyrene with occlusions of styrene grafted polybutadiene (HIPS). This product is melt blended with the polyphenylene ether of Example 1 and SAMS in a ratio of.33/34/33 (HIPS/PPE/SAMS).

In Example 7, both of the above described elastomers (grafted rubber concentrate and HIPS) are combined with the polyphenylene ether of Example 1 and SAMS in the ratio 16.5/16.5/34/33 (GRC/HIPS/PPE/SAMS).

The percentages of AMS are based on SAMS copolymer weight. Results are contained in Table II.

TABLE II

| Example | % PPE | % AMS | Vicat (°C) | Izod[1] | Tm ($10^5$psi) | Ty ($10^3$psi) | % E |
|---|---|---|---|---|---|---|---|
| 5[2] | 50 | 0 | 153 | 1.95 | 3.54 | 8097 | 9.7 |
| 6 | 34 | 48 | 146 | 0.63 | 3.56 | 6625 | 2.0 |
| 7 | 34 | 48 | 150 | 2.34 | 3.74 | 5864 | 3.3 |

[1] ft-lbs/in

[2] Not of the invention, no SAMS present. Comparative Example.

It is seen by comparison of the examples that very high impact strength and softening temperature may be obtained by the present blend containing styrene/-α-methylstyrene copolymer even where the amount of polyphenylene ether is reduced by one third. Examples 6 and 7 demonstrate compatibility of styrene grafted elastomers and even rubber modified polystyrene (HIPS) in a blend also containing SAMS and PPE according to the invention. In view of the fact that polymers of styrene and α-methylstyrene are not generally compatible, the ability according to the invention to incorporate styrene grafted elastomers and even HIPS with an α-methylstyrene containing copolymer is considered surprising.

Examples 8-11

Examples 8-11 illustrate the use of two different rubbers as impact modifiers and the use of various amounts of α-methyl styrene. In Examples 8-10, 19 percent of an emulsion grafted rubber (styrene 48 percent, polybutadiene grafting base 52 percent) is blended with the polyphenylene ether of Claim 1 (50 percent) and 30.8 percent polystyrene

(Example 8, comparative) or SAMS (Examples 9-10). In Example 11, ungrafted polybutadiene (Diene 55) is employed (rubber/PPE/SAMS = 10/50/40). Results are contained in Table III.

TABLE III

| Example | % AMS | Vicat (°C) | Izod (ft-lbs/in) | Tm ($10^5$psi) | Ty ($10^3$psi) | % E |
|---|---|---|---|---|---|---|
| 8[1] | 0 | 153 | 1.95 | 3.54 | 8097 | 9.7 |
| 9 | 48 | 166 | 2.07 | 3.74 | 8561 | 7.8 |
| 10 | 58 | 180 | 1.87 | 3.54 | 8246 | 6.1 |
| 11 | 48 | 168 | 1.1 | 3.54 | 7907 | 5.7 |

[1]Not of the invention, no SAMS present. Comparative Example.

Again, it may be seen that a polystyrene grafted rubber may be employed to result in even more improvement in impact strength than is obtainable by the use of ungrafted polybutadiene rubber. The relative compatibility of styrene grafted rubbers in the SAMS matrix is considered a surprising result.

0191326

1. A thermoplastic blended composition containing by weight from 1 to 99 percent of a polyphenylene ether and from 99 to 1 percent of a copolymer characterized by the copolymer consisting essentially of from 95 to 30.86 percent styrene and from 5 to 69.14 percent α-methylstyrene, the copolymer having been prepared by anionic polymerization of styrene and α-methylstyrene at a temperature above 65°C.

2. A composition according to Claim 1 wherein the copolymer of styrene and α-methylstyrene consists essentially of from 20 to 69.14 percent by weight α-methylstyrene.

3. A composition according to Claim 1 additionally including an elastomer.

4. A composition according to Claim 3 wherein the elastomer is selected from the group consisting of grafted diene rubbers, copolymers of styrene and a diene, copolymers of alkyl acrylates having from 1 to 12 carbons and terpolymers of two olefins and a diene.

5. A composition according to Claim 4 wherein the elastomer includes a butadiene rubber substrate having styrene polymer grafted thereto.

6. A composition according to Claim 5 wherein the elastomer is prepared by emulsion polymerization.

7. A composition according to Claim 6 wherein the elastomer particles include a bimodal distribution of rubber particles.

8. A composition according to Claim 3 wherein the elastomer includes a polybutadiene substrate having polystyrene grafted thereto and occluded therein prepared by mass polymerization of styrene and butadiene monomers.

9. A process for increasing the softening point and toughness of a first composition containing a polyphenylene ether, characterized by melt blending a styrene-or-methylstyrene copolymer with the first composition, thereby forming the product of Claim 1.

European Patent Office

# EUROPEAN SEARCH REPORT

0191326

Application number

EP 86 10 0781

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | US-A-3 383 435 (E.P. CIZEK)<br>* Claims *<br>----- | 1 | C 08 L 71/04<br>C 08 L 25/16 |
| | | | **TECHNICAL FIELDS SEARCHED (Int. Cl.4)** |
| | | | C 08 L |

The present search report has been drawn up for all claims

| Place of search | Date of completion of the search | Examiner |
|---|---|---|
| THE HAGUE | 26-05-1986 | FOUQUIER J.P. |

**CATEGORY OF CITED DOCUMENTS**

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document